# EUROPEAN PATENT SPECIFICATION

(11) **EP 2 285 659 B1**
(45) Date of publication and mention of the grant of the patent: **21.08.2013**
(21) Application number: 10741001.1
(22) Date of filing: 16.02.2010
(51) Int. Cl.: B63B 1/06

(54) **Arrangement of bulbous bow**
Anordnung eines Wulstbugs
Agencement d'étrave à bulbe

(30) Priority: 16.02.2009 SE 0950080
(43) Date of publication of application: 23.02.2011
(73) Proprietor: Rolls-Royce Marine AS, 6065 Ulsteinvik (NO)
(72) Inventor: Vedlog, Per Egil, NO-6037 Eidsnes (NO)
(74) Representative: Johansson, Lars E.
(86) International application number: PCT/IB2010/050695
(87) International publication number: WO 2010/092560

(56) References cited:
- EP-A2- 1 314 639
- WO-A1-97/24253
- DE-A1- 2 655 734
- DE-A1- 3 031 239
- FR-A- 1 410 826
- FR-A1- 2 698 843
- US-A- 3 888 200
- US-A1- 2006 005 756

## Description

### TECHNICAL FIELD

A hull for a seagoing vessel, comprising a steerboard hull side, a leeward hull side and a deck, wherein a bulb is integrated with said hull sides and also the stem.

The use of a bulbous bow to reduce the resistance of flow, for sea-going vessels/ships of the non-planing type, is well known for long, as is for example shown in JP61166783. There are many different known designs/shapes in connection with the use of a bulbous bow, but generally most concepts have in common that the bulb protrudes under the water line and that the stem portion is curved above the bulbous part, i.e. in a first midsection that is inclined toward the stem, followed by a further midsection comprising a concave curved stem portion bridging the upper stem portion which is inclined toward the stem. This design concept for a bulbous bow has been generally accepted and used for decades.

However, many design concepts deviating from the general bulb design have been tried, but without any actual success. Further, numerous designs have been suggested that without the use of a traditional bulb aim at improving flow resistance properties. For instance WO0017042 presents a relatively new kind of concept that is intended to improve flow conditions for a flat bottomed vessel, wherein is suggested that a modified kind of "bulbous bow" is used.

Moreover, EP 13141639 presents a hull for a seagoing vessel, with a stem extending substantially vertically, wherein a boyance is integrated with the hull sides adjacent the stem, such that the location of intersection between the stem and the boyance is positioned adjacent the most frontwardly projecting portion of the boyance. Many other various designs are known that indicate numerous different attempts to find new design concepts that could improve flow conditions.

### SUMMARY OF THE INVENTION

The object of the invention is to provide a new design concept that improves the flow conditions for sea-going vessels, which is achieved by means of a hull for a seagoing vessel, in accordance with claim 1.

Thanks to the new design concept a better utilization is achieved of the length over all of the design water line of a ship, which in turn leads to a reduced flow resistance. In the light of the fact that substantially vertical stems are known per se the new concept might seem trivial at a first view, but considering the combined advantages that are achieved it is evident that the synergistic results of the invention must indeed be seen as surprising to the skilled person.

### DESCRIPTION OF DRAWINGS

In the following the invention will be explained in more detail with reference to the figures, wherein:
- Fig. 1: is a side view of a part of a ship in accordance with the invention,
- Fig. 2: is a horizontal cross-sectional view along line II-II in Fig. 1,
- Fig. 3: is a vertical cross-sectional view along line III in Fig. 1,
- Fig. 4: is a vertical cross-sectional view along lines IV-N in Fig. 1,
- Fig. 5: is a vertical cross-sectional view along line V-V in Fig.1,
- Fig. 6: is a horizontal cross-sectional view along line VI-VI in Fig. 1,
- Fig. 7: is a modified side view of a ship in accordance with the invention,
- Fig. 8: is a further modification in accordance with the invention.

### DETAILED DESCRIPTION

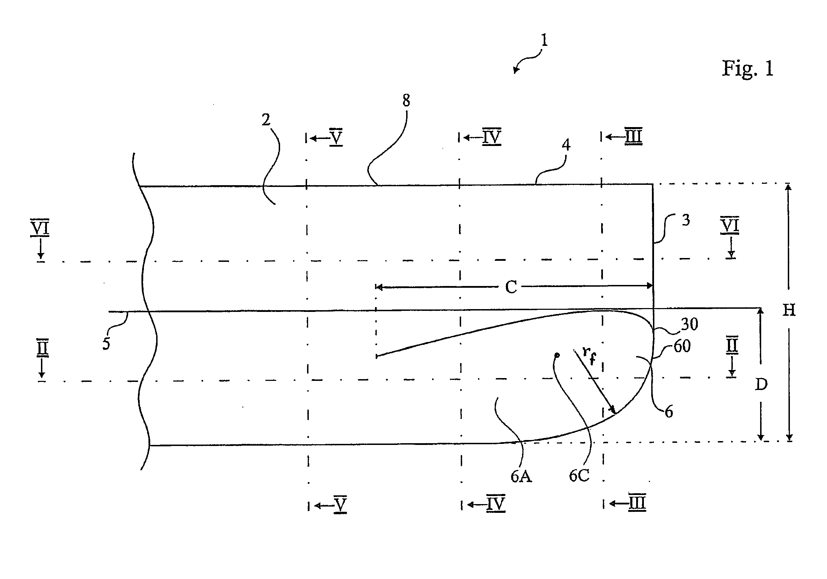

In Fig. 1 there is shown a front part of a ship 1 in accordance with the invention, having a steerboard side 2 and leeward side 8, which at the front is joined by a stem 3. The bottom is flat or has a deadrise and merges into the bilge at a given bilge radius. Integrated with the stem 3, below (or starting in level with) the intended waterline 5, i.e. Design Draught D, of the ship 1 there is arranged a bulbous bow 6, having a volume center 6C. The volume center 6C of the bulb 6 is positioned on a level adjacent a line in the middle between the bottom line and the intended waterline 5, presenting a large radius r_{f}(of the bottom periphery thereof, seen from the side as in fig 1) in the transition zone between the stem 3 and the bottom line, wherein the radius r_{f} is at least larger than 1/3 of the Design Draught D, preferably r_{f} is about D ± 10% . The bulbous bow is formed by a first half 6A extending along the steerboard side 2 and a second half 6B extending along the leeward side 8. The two halves 6A, 6B extend symmetrically in relation to the vertical central plane P of the ship 1.

The stem 3 extends substantially vertically and is positioned in relation to the bulbous bow 6 such that the stem 3 is joined to the bulbous bow 6 at a position 30 that is in front of the volume center 6C of the bulb 6, and as shown in the embodiment in Fig. 1, preferably at a position that substantially corresponds to the most frontwardly projecting portion 60 of the bulbous bow 6.

With regard to the length L, i.e. Lpp, of the ship 1 (Lpp is the length from Ap (after-perpendicular) to Fp (front-perpendicular) Fp is normally considered to be the point where the stem 3 meets the bulbous bow), the extension C of the bulb is normally within the range of L*0.035 < C < L*0.05. The maximum vertical extension D of the bulb is normally within the range Design Draught*0.9 < D < Design Draught* 1.1. (Design Draught of a ship 1 is the distance between the Base Line and the Design water Line).

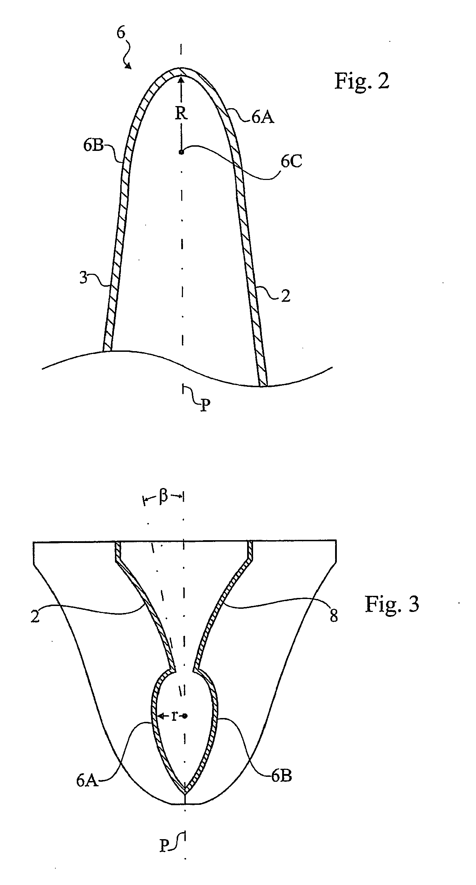

In Fig. 2 there is shown a horizontal cross-sectional view along line II-II in Fig. 1 of the ship 1. The cross-sectional view shows that a curvature R of the front portion of the bulb 6 is normally within the range of 0.2*Design Draught < R < 0.25*Design Draught. Further Fig. 2 shows that aftward of the bulb 6 the hull sides 2, 8 are arranged to diverge in the horizontal plane.

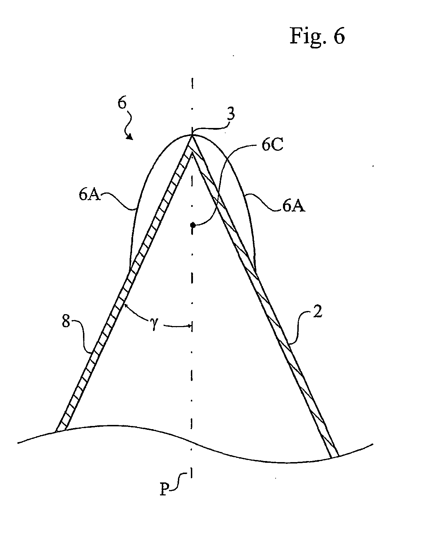

Fig. 6 shows a cross-sectional horizontal view along lines VI-VI in Fig. 1, i.e. a cross-sectional view above the cross-sectional view shown in Fig. 2. Here it is clearly shown that the stem 3 is formed to be relatively sharp by arranging each hull side 2, 8 with a sharp waterline entrance angle γ in relation to the vertical plane P. Normally the waterline angle γ of each hull side 2, 8 of the stem 3 will be within the range of 10 deg < γ < 20 deg. It is to be noted that below the hull sides 2, 8, near the stem 3, the bulbous portions 6A, 6B, will protrude outside of the area delimited by the hull sides 2, 8.

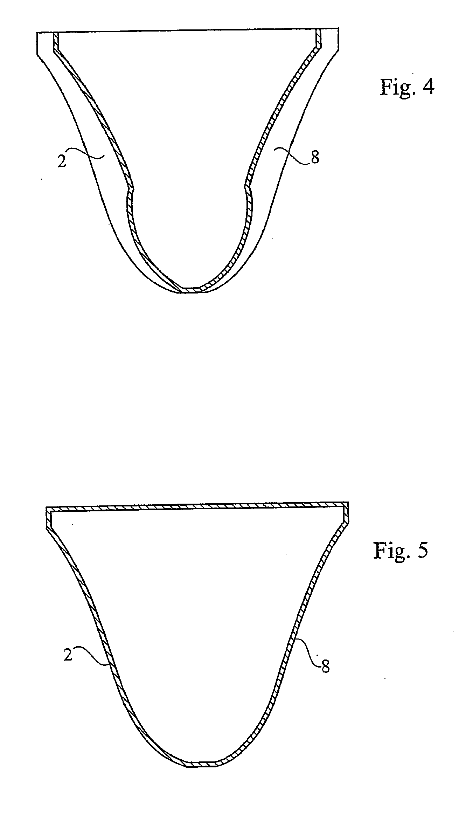

In Fig. 3 there is shown a cross sectional view along line III-III in Fig. 1 of the ship 1. The cross-sectional view shows that the curvature r of the bulb in the vertical plane P is normally in the range of 0.13*Ships Beam < r < 0.16*Ships Beam. (The ships Beam is its width at the widest point, or at the mid-point of its length) Further the cross-sectional view shows that according to the preferred embodiment of the invention the hull sides 2, 8 above the bulb 6 extend with a relatively sharp angle β, e.g. 5-25°, in relation to the vertical plane P. Indeed in some embodiments, at least partly said angle β may be close to zero, i.e. presenting almost substantially vertical hull sides 8, which may be an advantage in reducing pounding of the ship 1 in rough sea. The cross-sectional view shown in Fig. 4 presents that the hull sides 2, 8 may extend with a sharper angle β closer to the mid ship, i.e. in this embodiment the angle β is less sharp near the front.

Fig. 5 presents the cross-sectional design behind the bulb, having hull sides 2, 8 arranged to diverging upwardly, e.g. to thereby provide for a widened deck surface 4.

Thanks to the design in accordance to the invention there will be many synergetic advantages. Firstly the use of substantially a vertical stem 3, that forms a relatively sharp angle γ together with the hull sides 2, 8, will enable a low resistance to brake the water and especially regarding meeting waves. This advantage is enhanced by the use of sharply angled vertical hull sides 2, 8, such that reacting forces created by meeting waves will have a low influence regarding the direction of the propulsive force of the ship 1. Moreover the bulbous bow 6 will assist in creating a flow pattern below the waterline 5 that will improve the flow resistance of the ship 1. Finally the positioning of the stem 3, to substantially be in line with the front portion 60 of the bulb will provide a longer water line, compared to traditional positioning of bulbous bow, which also will have a positive influence regarding flow resistance of the ship 1.

Hence, the design according to the invention provides a fore ship having slender water lines so that the submersion of the facing volume is distributed over time and the retardation forces are substantially reduced. This solution reduces reflection of waves, it eliminates the slamming of waves and the speed loss in head sea is significantly reduced, e.g. thanks to improved distribution of internal volume.

The design may provide numerous advantages, e.g. lower accelerations and retardations, a reduction in the amount of green water on deck, minimized risk of heavy weather damage to the fore ship and the front bulkhead in the superstructure, improved working environment on board leading to improved safety and operability, reduction of noise and vibrations and smooth fore ship.

**Table 1: Comparative tests**

| **Test with conventional bulb bow design:** | | | | | | |
|---|---|---|---|---|---|---|
| | Significant wave height | Wave period | CalmWater speed | Mean speed In waves | Speed reduction | Speed reduction |
| **Run #** | **(m)** | **(s)** | **(kn)** | **(kn)** | **(%)** | **(kn)** |
| **2000** | **2,0** | **6,0** | **11,94** | **9,76** | **-18,54** | **-2,21** |
| **2010** | **2,0** | **8,0** | **11,94** | **8,18** | **-31,49** | **-3,76** |

| **Test with bow design acoording to the invention:** | | | | | | |
|---|---|---|---|---|---|---|
| **Run #** | **(m)** | **(s)** | **(kn)** | **(kn)** | **(%)** | **(kn)** |
| **4000** | **2,0** | **6,0** | **12,03** | **9,92** | **-17,51** | **-2,11** |
| **4010** | **2,0** | **8,0** | **12,03** | **8,37** | **-30,44** | **-3,66** |

As can be seen in table 1 drastic advantages are gained by means of a design according to the invention. In summary, to obtain 0,1 knot more speed in waves (i.e compensate for speed loss) for the conventional bow there is a need of an extra 36 kW, which is 3,5% more power input at 12 knots. Hence, the new design provides a significant reduction of fuel consumption, which leads to cost savings and increased storage volume.

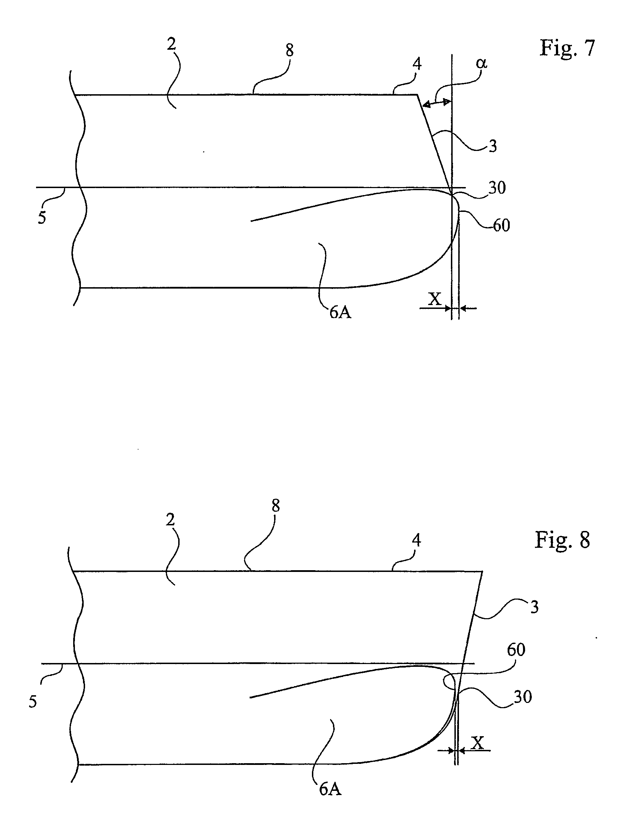

In Fig. 7 it is shown that the stem 3 may be arranged with an angle α that slightly deviates from the vertical line, and also that the position 30 where the stem 3 meets the bulbous bow 6 may be slightly off set X in relation to the front portion 60 of the bulb 6, wherein X preferably is less than 0,1R.

In Fig. 8 there is shown a further modification according to the invention, wherein the stem 3 also slightly deviates from the vertical line, but with an angle that is in an opposite direction compared to the embodiment of Fig. 7. Further it is shown in Fig. 8 that the meeting point 30 of the stem 3 and the bulbous bow 6 may also deviate a distance X in an opposite direction compared to Fig. 7. It is evident that Figs. 7 and 8 present deviations from the preferred embodiment shown in Fig. 1, but wherein substantial advantages in accordance with the invention is still obtained.

## Claims

1. A hull for a seagoing vessel, comprising a steer board hull side (2), a leeward hull side (8) and a deck (4), with a stem (3) extending substantially vertically, wherein a bulb (6) is integrated with said hull sides (2, 8) adjacent the stem (3), such that the location of intersection (30) between the stem (3) and the bulb (6) is positioned adjacent the most frontwardly projecting portion (60) of the bulb (6), **characterised in that** said bulb (6) has a maximum vertical extension (D) that is within the range 0,9 Design Draught < D < 1.1 Design Draught, a curvature (R) at the front portion of the bulb (6) within the range of 0.2 Design Draught < R < 0.25 Design Draught, and that each hull side (2, 8) above the bulb (6) form a sharp water line entrance angle (γ) within the range 10 deg < γ < 20 deg.

2. A hull according to claim 1, **characterised in that** the curvature (r) of the bulb in the vertical plane (P) is within the range of 0.13*Ships Beam < r < 0.16*Ships Beam.

3. A hull according to claim 1 or 2, **characterised in that** each hull side (2, 8) above the bulb (6) extend upwardly to form a relatively sharp angle (β), within the interval 0° < β < 30°, preferably 5-25°, in relation to the vertical plane (P).

4. A hull according to any preceding claim, **characterised in that** said stem (3) extends to form an angle (α) in relation to a vertical line that is in the range -10° < α < +10°.

5. A hull according to any preceding claim, **characterised in that** the intersection point (30) between said stem (3) and said bulb (6) is positioned within a distance (X) within the range of 0 ≤ X < 0,1 R, wherein said distance (X) is formed between the vertical tangential line of the most frontward surface (60) of the bulb (6) and a vertical line through the most frontward point (30) of the intersection between the bulb (6) and the stem (3).

## Patentansprüche

1. Schiffsrumpf für ein Seeschiff, umfassend
eine Steuerbord-Rumpfseite (2),
eine Leewärts-Rumpfseite (8), und
ein Deck (4),
mit einem Vordersteven (3), der sich im Wesentlichen vertikal erstreckt,
wobei ein Bugwulst (6) mit den Rumpfseiten (2, 8) benachbart des Vorderstevens (3) integriert ist, so dass der Schnittpunkt (30) zwischen dem Vordersteven (3) und dem Bugwulst (6) bei dem am weitesten vorragenden Abschnitt (60) des Bugwulstes (6) angeordnet ist,
**dadurch gekennzeichnet,**
**dass** der Bugwulst (6) eine maximale vertikale Erstreckung (D) aufweist, die sich im Bereich von 0,9 Konstruktionstiefgang < D < 1,1 Konstruktionstiefgang befindet, eine Krümmung (R) an dem vorderen Abschnitt des Bugwulstes (6) im Bereich von 0,2 Konstruktionstiefgang < R < 0,25 Konstruktionstiefgang, und
**dass** jede Rumpfseite (2, 8) oberhalb des Bugwulstes (6) einen spitzen Wasserlinien-Eintrittswinkel (γ) im Bereich zwischen 10° < γ < 20° bildet.

2. Schiffsrumpf gemäß Anspruch 1, **dadurch gekennzeichnet, dass** die Krümmung (r) des Bugwulstes in der vertikalen Ebene (P) im Bereich von 0,13* Schiffsbreite < r < 0,16* Schiffsbreite liegt.

3. Schiffsrumpf gemäß Anspruch 1 oder 2, **dadurch gekennzeichnet, dass** jede Rumpfseite (2, 8) sich oberhalb des Bugwulstes (6) so nach oben erstreckt, dass sie einen relativ spitzen Winkel (β) innerhalb des Intervalls 0° < β < 30°, bevorzugt 5° < β < 25°, in Bezug auf die vertikale Ebene (P) bildet.

4. Schiffsrumpf gemäß einem der vorstehenden Ansprüche, **dadurch gekennzeichnet, dass** der Vordersteven (3) sich so erstreckt, dass er einen Winkel (α) in Bezug auf die vertikale Linie bildet, der sich im Bereich von -10° < α < +10° befindet.

5. Schiffsrumpf gemäß einem der vorstehenden Ansprüche, **dadurch gekennzeichnet, dass** sich der Schnittpunkt (30) zwischen dem Vordersteven (3) und dem Bugwulst (6) innerhalb eines Abstandes (X) innerhalb des Bereichs 0 ≤ X < 0,1 R befindet, wobei der Abstand (X) zwischen der vertikalen Tangente der vordersten Oberfläche (60) des Bugwulstes (6) und einer vertikalen Linie durch den vordersten Punkt (30) der Kreuzung zwischen dem Bugwulst (6) und dem Vordersteven (3) gebildet ist.

## Revendications

1. Coque pour un navire de haute mer, comprenant un côté de coque tribord (2), un côté de coque sous le vent (8) et un pont (4), avec une étrave (3) s'étendant sensiblement verticalement, dans laquelle un bulbe (6) est intégré auxdits côtés de coque (2, 8) adjacents à l'étrave (3) de sorte que l'intersection (30) entre l'étrave (3) et le bulbe (6) soit positionnée à côté de la partie la plus avant (60) du bulbe (6), **caractérisée en ce que** ledit bulbe (6) présente une extension verticale maximale (D) comprise dans la plage de 0,9 de tirant d'eau < D < 1,1 de tirant d'eau, une courbure (R) sur la partie avant du bulbe (6) comprise dans la plage de 0,2 de tirant d'eau < R < 0,25 de tirant d'eau, et **en ce que** chaque côté de coque (2, 8) au-dessus du bulbe (6) forme un angle d'entrée de ligne d'eau vif (y) compris dans la plage de 10 degrés < y < 20 degrés.

2. Coque selon la revendication 1, **caractérisée en ce que** la courbure (r) du bulbe dans le plan vertical (P) est comprise dans la plage de 0,13*la largeur du navire < r < 0,16*la largeur du navire.

3. Coque selon la revendication 1 ou 2, **caractérisée en ce que** chaque côté de coque (2, 8) au-dessus du bulbe (6) s'étend vers le haut pour former un angle relativement vif (β), dans l'intervalle 0° < β < 30°, de préférence 5 à 25° par rapport au plan vertical (P).

4. Coque selon l'une quelconque des revendications précédentes, **caractérisée en ce que** ladite étrave (3) s'étend pour former un angle (α) par rapport à une ligne verticale qui est compris dans la plage -10° < α < +10°.

5. Coque selon l'une quelconque des revendications précédentes, **caractérisée en ce que** le point d'intersection (30) entre ladite étrave (3) et ledit bulbe (6) est positionné dans une distance (X) dans la plage de 0 ≤ X < 0,1 R, dans laquelle ladite distance (X) est formée entre la ligne tangentielle verticale de la surface la plus en avant (60) du bulbe (6) et une ligne verticale passant par le point le plus en avant (30) de l'intersection entre le bulbe (6) et l'étrave (3).
